# EUROPEAN PATENT APPLICATION

(11) **EP 2 851 322 A2**
(43) Date of publication of application: **25.03.2015**
(21) Application number: 14185458.8
(22) Date of filing: 18.09.2014
(51) Int. Cl.: B65H 31/30, B65H 31/34

(54) **A method of aligning a stack, method of aligning stacks of a stream of stacks, method of transporting stacks of a stream of stacks, and a stack aligner for aligning stacks of a stream of stacks**

(30) Priority: 18.09.2013 US 201361879236 P; 17.09.2014 US 201414489160
(71) Applicant: C.G. BRETTING MANUFACTURING CO., INC., Ashland, WI 54806 (US)
(72) Inventor: Michler, James R., ASHLAND, WI Wisconsin 54806 (US); Petersen, Jeffrey Tom, ASHLAND, WI Wisconsin 54806 (US); Lunn, Ryan Jay, ASHLAND, WI Wisconsin 54806 (US); Balduc, Andrew Kell, IRONWOOD, MI Michigan 49938 (US); Retzloff, Timm G., WASHBURN, WI Wisconsin 54891 (US)
(74) Representative: Gevers Patents

(57) **Abstract**

A system (100) for forming and wrapping a plurality of stacks (108) of sheet-like product is provided. The system includes a stack aligner (114) for squaring up leading and trailing ends (126, 128) of the stack as well as sides (130, 132) of the stacks is provided. The stack aligner is also configured for controlling the position of the stacks along the stack travel path (112) such that the stacks exit the stack aligner with tight positional tolerances for being fed to the stack wrapping arrangement (116).

## Description

### CROSS-REFERENCE TO RELATED PATENT APPLICATIONS

This patent application claims the benefit of U.S. Provisional Patent Application No. 61/879,236, filed September 18, 2013, the entire teachings and disclosure of which are incorporated herein by reference thereto.

### FIELD OF THE INVENTION

This invention generally relates to systems for forming wrapped stacks of sheet-like product, and particularly to an alignment apparatus for aligning stacks of sheet-like product prior to being wrapped into packs.

### BACKGROUND OF THE INVENTION

Many sheet-like products such as, for example, napkins, facial tissues or paper towels are stacked and then wrapped for shipment. Many wrapping arrangements for wrapping the stacks process the stacks in a single-file orientation.

The wrapping process and wrapping arrangements do not tolerate large variations in the spacing between stacks or variations in the shape/squareness of the stacks. As such, it is desirable to feed stacks to the wrapping arrangement at a constant interval with the stacks in a desired position along the path along which the stacks are fed to the stacking arrangement. Also, it is desired for the stacks to have all of the sheets properly aligned such that the sides of the stacks are generally planar.

As the speed of production of the stacks of sheet-like product increases it becomes more and more difficult to maintain the squareness of the stacks as well as the accuracy of the stacks along the stack travel path.

Further, many stacks are formed from cutting the stack (also referred to as a clip) from a larger log of stacks of sheet-like product, typically longer. These logs will typically pass through and be cut by a cutting arrangement which is typically a log saw. These logs are often produced and supplied to the log saw at varying intervals which causes further variation in the spacing and positional accuracy of the stream of stacks supplied to the wrapping arrangement.

Embodiments of the present invention relate to improvements in the current state of the art.

### BRIEF SUMMARY OF THE INVENTION

A new and improved system for forming wrapped stacks of sheet-like product is provided. Methods of aligning sheets within a stack of sheet-like product are also provided.

In one particular embodiment, a method of aligning a stack of a plurality of vertically stacked sheet-like products as the stack travels along a travel path as the stack travels through a stack aligner as the stack travels along the travel path is provided. The stack has a downstream leading end, an upstream trailing end, a pair of sides extending between the leading end and the trailing end, a top and a bottom.

The method includes feeding the stack to the stack aligner, pressing the stack between a first paddle of the stack aligner that is downstream from the stack and a second paddle of the stack aligner that is upstream from the stack so as to substantially align all of the sheet-like product such that the leading end and trailing end of the stack are substantially parallel to one another and orthogonal to the travel path.

In one method, the method further includes the step of pushing the stack out of the stack aligner using the second paddle.

In one method, the method further includes squeezing the stack in a transverse direction that is perpendicular to the travel path so as to substantially align substantially all of the sheet-like product such that the sides of the stack are substantially parallel to one another and orthogonal to the leading and trailing ends.

In one embodiment, the step of squeezing the stack in a transverse direction is performed by passing the stack between a pair of transversely offset side guides that extend substantially parallel to one another and parallel to the travel path. Typically, the stack is pushed between the side guides by the second paddle.

In one embodiment, the method includes independently controlling the position of the first and second paddles along the travel path. After aligned, a method includes dispensing the stacks from the stack aligner.

In one embodiment, the stacks are fed to the stack aligner at a first speed along the travel path and are dispensed from the stack aligner at a second speed along the travel path. The second speed may be slower or faster than the first speed depending on the operating parameters of the system.

In one embodiment, a further method of aligning stacks of a stream of stacks as the stacks travel through a stack aligner as the stacks travel along a travel path is provided. Each stack has a plurality of stacked sheet-like products. Each stack generally has a downstream leading end, an upstream trailing end, a pair of sides extending between the leading end and the trailing end, a top and a bottom.

The method includes feeding the stream of stacks to the stack aligner with a gap formed between adjacent stacks; inserting a paddle of the stack aligner into each gap between adjacent stacks, such that each stack has a paddle upstream of the stack and a paddle downstream from the stack as the stacks travel through the stack aligner. The method also includes pressing each stack between the paddle upstream of the stack and the paddle downstream of the stack so as to substantially align all of the sheet-like product such that the leading end and trailing end of the stack are substantially parallel to one another and orthogonal to the travel path.

In one embodiment, the method also includes changing the spacing between the paddle upstream of the stack and the paddle downstream of the stack such that the paddle downstream of the stack no longer contacts the stack and the stack is pushed by the paddle upstream of the stack. This operation occurs after the step of squeezing. This can be done by increasing the speed of the downstream paddle or reducing the speed of the upstream paddle. This decision can be decided on the overall number of stacks accumulated within the stack aligner.

In one embodiment, the method further includes squeezing each stack in a transverse direction that is perpendicular to the travel path so as to substantially align all of the sheet-like product of a given stack such that the sides of a given stack are substantially parallel to one another and orthogonal to the leading and trailing ends of the stack.

In one embodiment, the step of squeezing each stack in a transverse direction is performed by passing the stacks between a pair of transversely offset side guides that extend generally parallel to one another and parallel to the travel path.

In one embodiment, the stack is pushed between the side guides by the second paddle.

In one embodiment, the method includes independently controlling the position of the first and second paddles along the travel path.

In one embodiment, the method is configured for accumulating stacks and the method includes increasing a number of accumulated stacks within the stack aligner.

In one embodiment, increasing a number of accumulated stacks within the stack aligner includes: feeding the stream of stacks to the stack aligner with a gap formed between adjacent stacks at an average feed rate but with an inconsistent gap width between adjacent stacks; and dispensing the stacks at an outlet end of the stack aligner at an average dispensing rate with a substantially equal spacing between adjacent stacks, the supply rate being greater than the dispensing rate.

In one embodiment, the step of feeding the stream of stacks to the stack aligner with a gap formed between adjacent stacks includes feeding the stream of stacks to the stack aligner at an average feed rate with inconsistent gap widths between sets of adjacent stacks; and further includes dispensing the stacks at an outlet end of the stack aligner at an average dispensing rate with substantially consistent gap widths between adjacent stacks.

In one embodiment, the average feed rate is substantially equal to the average dispensing rate.

In one embodiment, the average feed rate is less than the average dispensing rate such that a number of stacks within the stack aligner decreases. In one embodiment, the average feed rate is greater than the average dispensing rate such that a number of stacks within the stack aligner increases. Additionally, the system may switch between accumulating stacks and reducing the number within the stack aligner.

In one embodiment, each paddle travels in a substantially orthogonal direction relative to the travel path as the paddle is inserted into a corresponding gap between adjacent stacks. In one embodiment, the method includes retracting each paddle from the corresponding gap between each adjacent stack and wherein each paddle travels in a substantially orthogonal direction relative to the travel path as the paddle is retraced from the corresponding gap between adjacent stacks.

In another embodiment, a method of transporting stacks of a stream of stacks from a log saw where the stacks are formed from a plurality of longer logs to a wrapper for wrapping the stacks is provided. Each stack including a plurality of stacked sheet-like products, each stack generally having a downstream leading end, an upstream trailing end, a pair of sides extending between the leading end and the trailing end, a top and a bottom.

The method includes feeding the stacks to a stack aligner as the stacks travel along a stack travel path at a stack aligner inlet; dispensing the stacks from the stack aligner at a stack aligner outlet; sensing a position of each stack prior to feeding the stack to the stack aligner; calculating a motion profile to insert a paddle of the stack aligner after each stack.

In one embodiment, the method further includes receiving the stacks at an inlet end of the stack aligner at an average supply rate but with unequal spacing between adjacent stacks; and dispensing the stacks at an outlet end of the stack aligner at an average dispensing rate with a substantially equal spacing between adjacent stacks.

In one embodiment, the average supply rate is substantially equal to the average dispensing rate.

In one embodiment, the method includes independently controlling the motion of each of the paddles.

A stack aligner for aligning stacks of a stream of stacks as the stacks travel along a stack travel path is provided. Adjacent ones of the stacks are longitudinally spaced apart along the travel path forming a gap therebetween. Each stack includes a plurality of stacked sheet-like products. Each stack generally has a downstream leading end, an upstream trailing end, and a pair of sides extending between the leading end and the trailing end.

The stack aligner includes a plurality of paddles, a guide arrangement and a control arrangement. The paddles are configured for being inserted into the gap between adjacent stacks. The guide arrangement guides the paddles along a paddle travel path. The paddle travel path having a portion thereof that is coincident with a portion of the stack travel path. The control arrangement is configured to independently control the motion of the paddles along the paddle travel path. As such, the paddles can control the speed of the stacks through the coincident portion of the travel paths at different speeds. This allows for improved positional accuracy of the stacks as well as improving the squareness of the stacks.

In one embodiment, the control arrangement is configured to control the motion of the of the plurality of paddles such that when adjacent paddles have been inserted into corresponding gaps the control arrangement reduces the spacing between adjacent paddles such that the paddles press the stack positioned therebetween between the paddle upstream of the stack and the paddle downstream of the stack so as to substantially align all of the sheet-like product such that the leading end and trailing end of the stack are substantially parallel to one another and orthogonal to the travel path.

In one embodiment, the stack aligner includes a pair of side guides transversely offset from one another and that generally extend longitudinally along the stack travel path. The side guides may be transversely spaced apart a distance equal to a width of the stacks from side to side, slightly greater than the width of the stacks or slightly less than the width of the stacks.

In one embodiment, the side guides remain in a substantially fixed position while the stacks pass therebetween.

In one embodiment, the guide arrangement includes a carriage track that defines a closed guide path; a first cam track and a second cam track. Each paddle is pivotally attached to a guide carriage that is guided by the carriage track along the closed guide path. Each paddle is operably coupled to first and second cam followers. The first cam follower and the first cam track are configured to rotate the paddle relative to the carriage track and the closed guide path at least 60 degrees, preferably at least 75 degrees, more preferably at least 80 degrees and even more preferably at least 85 degrees and desirably about 90 degrees. The second cam follower and the second cam track are configured to rotate the paddle relative to the carriage track and the closed guide path at least 60 degrees, preferably at least 75 degrees, more preferably at least 80 degrees and even more preferably at least 85 degrees and desirably about 90 degrees.

In one embodiment, the guide arrangement includes a carriage track that defines a closed guide path and a cam track arrangement. Each paddle is pivotally attached to a guide carriage that is guided by the carriage track along the closed guide path for motion in a single direction. Each paddle is operably attached to a cam follower arrangement. The cam track arrangement and cam follower arrangement are configured to rotate the paddle relative to the carriage track and the closed guide path while inserting the paddle between adjacent stacks. The cam track arrangement and cam follower arrangement are configured to rotate the paddle relative to the carriage track and the closed guide path while removing the paddle from between adjacent stacks.

In a more particular embodiment, the cam track arrangement and cam follower arrangement are configured to rotate the paddle relative to the carriage track and the closed guide path approximately 90 degrees in a first angular direction while inserting the paddle between adjacent stacks; and the cam track arrangement and cam follower arrangement are configured to rotate the paddle relative to the carriage track and the closed guide path in the approximately 90 degrees while removing the paddle from between adjacent stacks.

In one embodiment, the cam track arrangement and cam follower arrangement are configured to rotate the paddle relative to the carriage track and the closed guide path such that the paddle remains substantially orthogonal to the stack travel path as the paddle is inserted into the gap; and the cam track arrangement and cam follower arrangement are configured to rotate the paddle relative to the carriage track and the closed guide path such that the paddle remains substantially orthogonal to the stack travel path as the paddle is removed from the gap.

In one embodiment, the first and second cam tracks are transversely offset from one another in a direction perpendicular to the stack travel path.

In one embodiment, the first cam follower and the first cam track are configured to maintain upstream and downstream contact surfaces of the paddle in a substantially orthogonal orientation relative to the stack travel path as the paddles are transitioned into and enters a gap between adjacent stacks; and the second cam follower and the second cam track are configured to maintain the upstream and downstream contact surfaces of the paddle in a substantially orthogonal orientation relative to the stack travel path as the paddles are transitioned out of and exits a gap between adjacent stacks.

In one embodiment, the first and second cam followers and first and second cam tracks are configured to maintain the upstream and downstream contact surfaces orthogonal to the stack travel path substantially the entire time that the paddle travel path is coincident with the stack travel path.

In one embodiment, the control arrangement is configured to control the motion of the of the plurality of paddles such that after adjacent paddles have pressed a stack positioned therebetween, the longitudinal spacing along the paddle travel path, as well as the stack travel path, between the adjacent paddles is increased so that only the trailing end of the stack is contacted the paddle upstream from the corresponding stack.

In one embodiment, the control arrangement is configured to independently control the motion of the paddles such that the positional tolerance of each stack along the stack travel path after the stack is no longer controlled by a paddle of the stack aligner is less than +/-0.25 inches.

In one embodiment, the motion of the paddles is not mechanically tied to one another such that each paddle can be independently accelerated along the paddle travel path.

In one embodiment, the stack aligner includes an in feed conveyor, an out feed conveyor and a low friction surface. The low friction surface is interposed between the in feed conveyor and the out feed conveyor.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a simplified schematic illustration of a pack forming system;
FIG. 2 is a simplified illustration of a stack of sheet-like product that is formed and wrapped in the pack forming system of FIG. 1;
FIG. 3 is a partial illustration of an embodiment of a stack aligner of the system of FIG. 1;
FIG. 4 is a simplified schematic illustration of the stack aligner of FIG. 3 in operation;
FIGS. 5 and 6 illustrate a slightly modified embodiment of the stack aligner of FIGS. 3 and 4 illustrating the stack aligner in a maximum accumulation state (FIG. 5) and a minimum accumulation state (FIG. 6);
FIG. 7 is a simplified control algorithm for controlling the stack aligner; and
FIGS. 8-11 are more detailed control schematics for the control algorithm of FIG. 7.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

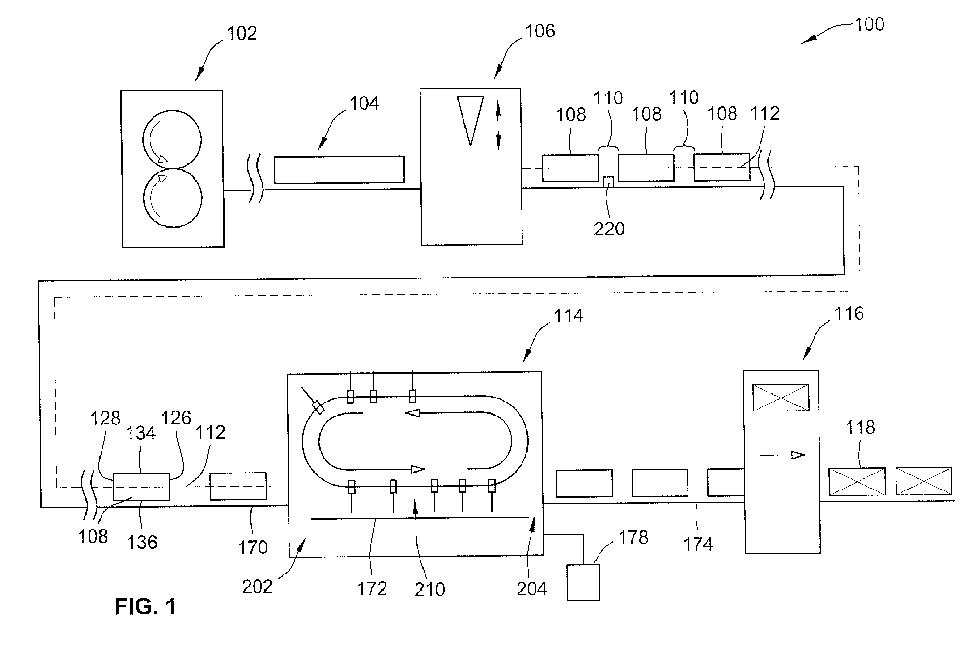

FIG. 1 is a schematic illustration of a pack forming system 100 according to an embodiment of the present invention. The pack forming system 100 is configured to form and then wrap stacks of sheet-like product such as napkins or facial tissue to form packs of sheet-like product. Typically, the pack forming system 100 will receive a web of material and convert the web of material into the packs of sheet-like product.

The illustrated pack forming system 100 includes a folding arrangement 102 that receives a continuous web of material and cuts the web into individual sheets and stacks the sheets to form logs 104. The sheets within the logs 104 may be folded any number of times. Further, adjacent sheets in the logs may be interfolded or merely in a stacked configuration and not interfolded. Preferably, adjacent sheets are vertically stacked. However, embodiments of the invention are not so limited and in some embodiments, the sheets may be vertically oriented such that the sheets rest on edges thereof and are stacked horizontally.

In some embodiments, the length of the logs may be in excess of 8 feet.

The logs 104 are transported downstream to a cutting mechanism. The cutting mechanism is in the form of a log saw 106. The log saw 106 cuts the logs 104 into individual stacks 108 (a stack 108 may also be referred to as a "clip"). A typical log 106 may be cut into 5 to 15 separate stacks 108. However larger logs or smaller stacks may result in more stacks per log.

Adjacent stacks 108 downstream from the log saw 106 are typically spaced apart along a stack travel path 112 forming gaps 110 therebetween.

The stream of stacks 108 travel along the stack travel path 112 downstream from the cutting mechanism to a pack aligner 114. The stack aligner 114 is configured to square up or otherwise straighten the sheets within the pack as well as to provide consistent spacing between the stacks 108 and proper positional location of the stacks 108 along the stack travel path in preparation for wrapping.

After passing the pack aligner 14, the stacks 118 travel along the stack travel path 112 to a wrapping arrangement 116. In a preferred embodiment the wrapping arrangement 116 is a progressive wrapper. Typically, the stacks 108 are wrapped in a clear plastic material. However, other wrapping arrangements could be incorporated that are not progressive wrappers or that utilize other materials such as other plastic or paper materials. The wrapped stacks form individual packs 118. The packs 118 will travel downstream where they can be further packaged for shipment.

Other folding arrangements 102 are contemplated. For instance, rather than forming logs of sheets that need to be cut into individual clips or stacks, the folding arrangement could directly form individual stacks of sheet-like product such that a cutting mechanism is not required between the folding arrangement and the stack aligner. In such an embodiment, a plurality of lanes of stacks may be formed. Because the stacks 108 must pass through the wrapping arrangement 116 in single file, a stack merger (not shown) may be interposed between the folding arrangement and the stack aligner 114 if only a single wrapping arrangement 116 is provided in the system.

It is desired to supply the stream of stacks 108 to the wrapping arrangement 116 with a position tolerance less than +/- 0.05 inches. The position tolerance for various mechanisms upstream from the pack aligner can range from +/- 0.25 inches to in excess of +/- 1 inch depending on the type of sheet-like product or the upstream processes used to produce the single file stream of stacks 108. This positional tolerance can provide significant problems with the wrapping process. The stack aligner 114 can rectify this low tolerance to improve the operation of the wrapping arrangement 116 and provide tolerance of less than +/- 0.25.

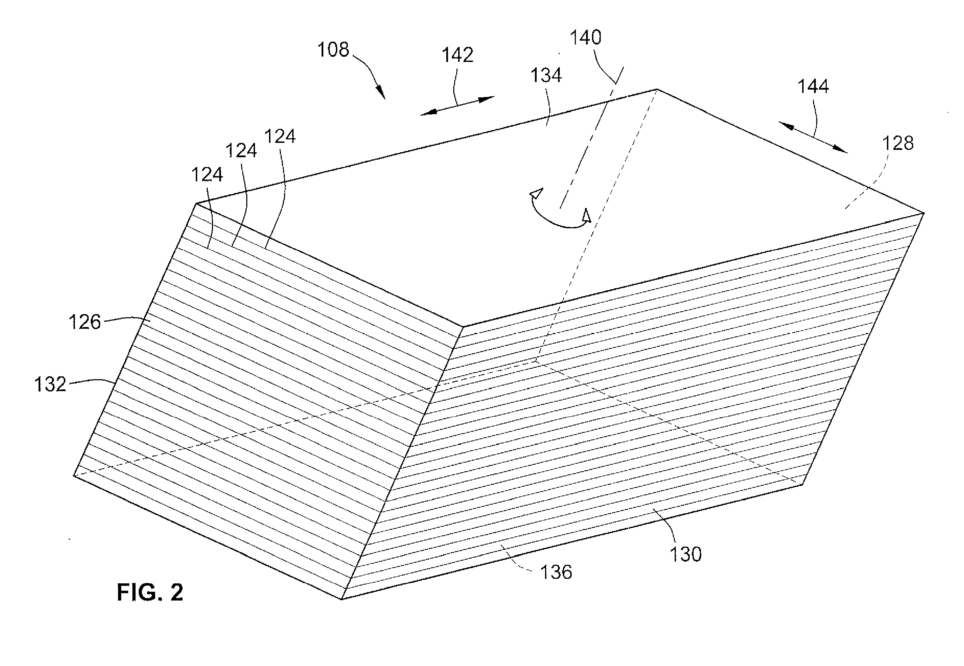

For reference, FIG. 2 illustrates a simplified representative stack 108. The stack has a plurality of sheets 124. The sheets 124 may have one or more panels. If a plurality of panels are provided the panels would be connected to one another by a fold, as is generally well known. The sheets 124 are stacked generally vertically on top of one another. Vertically on top of one another shall include having adjacent ones of the sheets 104 interfolded with one another.

The stack 108 generally includes a downstream leading end 126 that is generally parallel to an upstream trailing end 128. A pair of opposed sides 130, 132 extend generally parallel to one another and between leading and trailing ends 126, 128. A top side 134 extends generally parallel to a bottom side 136. The top and bottom sides 134, 136 extend generally perpendicular to the opposed sides 130, 132 as well as generally perpendicular to the leading and trailing ends 126, 128. All of the ends/sides 126, 128, 130, 132, 134, 136 are desirably rectangular and planar.

With additional reference to FIG. 1, when the stacks 108 travel along the stack travel path 112 upstream of the stack aligner 114, the leading and trailing ends 126, 128 are generally orthogonal to the stack travel path 112 and the opposed sides 130, 132 and top and bottom sides 134, 136 are generally parallel to the stack travel path 112.

Due to the process upstream from the stack aligner 114 that form and align the stacks in a single file line for wrapping, the stacks 108 can be less square than desirable. For instance, individual sheets 124 could be rotated relative to the stack such as about a vertical axis 140 that is perpendicular to the panels of the sheets 124. This will give the stack a twisted configuration. Additionally, sheets 124 could be shifted forward or backward along the sheet travel path 112 such as illustrated by arrow 142 such that some the leading and trailing ends 126, 128 of the stack are not orthogonal relative to the stack travel path. Additionally, the sheets 124 can be laterally shifted in a direction perpendicular to the sheet travel path such as illustrated by arrow 144 such that the opposed sides 130, 132 are not perpendicular to the top and bottom sides 134, 136. The stack aligner 114 can also rectify these deficiencies and square-up the sheets 124 within a stack 108.

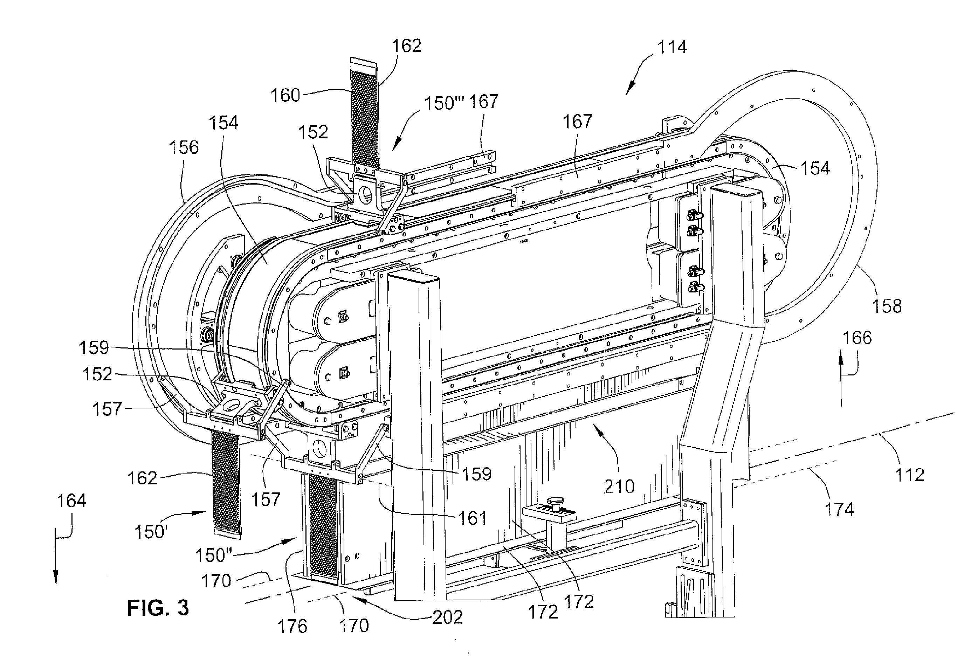

FIG. 3 is a partial illustration of the stack aligner 114. The stack aligner 114 is used to both square-up the sheets in a given pack as well as improve the positional tolerances of the stream of stacks prior to the stacks 108 reaching the wrapping arrangement 116.

The stack aligner 114 includes a plurality of paddles 150 that push the stacks 108 through the stack aligner 114. Each paddle 150 is pivotally attached to a guide carriage 152 which is carried and guided by a carriage track 154. The carriage track 154 defines a closed guide path along which the guide carriages 152 are guided. The carriage track 154 and guide carriages 152 are preferably configured such that the guide carriages 152 are independently controllable along the guide path defined by the carriage track 154 such that each guide carriage 152 can be accelerated independently of the rest of the guide carriages 12 mounted to the carriage track 154. In one embodiment, the carriage track 154 and guide carriages 152 form a linear synchronous motor such as provided by Jacobs Automation Inc of Erlanger, Kentucky.

The guide track 154 and a pair of cam tracks 156, 158 form a guide arrangement that guides the motion of the paddles 150 through a paddle travel path as the guide carriages 152 travel along the guide path of the carriage track 154.

The pair of cam tracks 156, 158 are laterally spaced apart in a direction perpendicular to the stack travel path 112 such that the cam tracks are on opposite sides of the carriage track 154 as well as opposite sides of the paddles 150 and guide carriages 152. The paddles 150 are fixedly attached to corresponding cam followers 157, 159 that cooperate with cam track 156 and cam track 158, respectively, for rotating the paddles 150 about rotational axis 161.

The guide arrangement is configured such that the paddles 150 are inserted into the gaps 110 (see FIG. 1) between adjacent stacks 108 in a substantially orthogonal direction relative to the stack travel path 112. Front (i.e. downstream) and rear (i.e. upstream) surfaces 160, 162 of the paddles 150, which are substantially planar surfaces, remain substantially orthogonal to the stack travel path 112 as the paddles 150 are inserted into gaps 110. Preferably, the paddles 150 remain substantially vertically upright while moving in the vertical downward direction illustrated by arrow 164 as the paddles 150 are inserted in to gap 110 between adjacent stacks 108.

This motion of the paddles 150 is controlled by cam track 156 and corresponding cam follower 157. This causes the paddle to rotate relative to the carriage track 154 and the guide carriage 152 approximately 90 degrees about rotational axis 161 in a first direction during the insertion process while a paddle 150 is being inserted into gap 110. This motion transitions the paddle 150 from the orientation illustrated by paddle 150' to the orientation illustrated by paddle 150". However, prior to this motion, cam track 156 causes the paddles 150 to rotate in a second, opposite, direction about rotational axis 161 of approximately 90 degrees. This initial motion transitions the paddle 150 from the orientation illustrated by paddle 150'" to the orientation illustrated by paddle 150'.

Additionally, the guide arrangement is configured such that the paddles 150 are retracted from the gaps 110 (see FIG. 1) between adjacent stacks 108 in a substantially orthogonal direction relative to the stack travel path 112. Front and rear surfaces 160, 162 of the paddles 150 remain substantially orthogonal to the stack travel path 112 as the paddles 150 are retracted from gaps 110. Preferably, the paddles 150 remain substantially vertically upright while moving in the vertical upward direction illustrated by arrow 166 as the paddles 150 are retracted from gap 110 between adjacent stacks 108.

This motion of the paddles 150 is controlled by cam track 158 and corresponding cam follower 159. This causes the paddle to rotate relative to the carriage track 154 and the guide carriage 152 approximately 90 degrees about rotational axis 161 in a the first direction during the retraction process while the paddle is being retracted from gap 110. After this initial motion in the first direction, cam track 158 causes the paddles 150 to rotate in the second direction about rotational axis 161 of approximately 90 degrees.

As such, the first cam track 156 is configured to cause the paddles 150 to undergo rotation in both the first and second directions about rotational axis 161 while the paddles 150 are under control of the first cam track 156. Similarly, the second cam track 158 is configured to cause the paddles 150 to undergo rotation in both the first and second directions about rotational axis 161 while the paddles 150 are under control of the second cam track 156. The first cam track 156 first causes rotation of paddles 150 about axis 161 in the second direction and then in the first direction. The second cam track 156 first causes rotation of paddles 150 about axis 161 in the first direction and then in the second direction.

The cam tracks 156, 158 have overlapping regions 167 where the paddles 150 transition from being controlled by one of the cam tracks 156, 158 to being controlled by the other one of the cam tracks 158, 156. In the illustrated embodiment, the overlapping regions 167 exist adjacent a linear section, e.g. straight section, of the guide track 154 travel path where the paddle 150 extends orthogonally relative to the guide track 154.

As the paddle 150 travels around the guide track 154, the cam tracks 156, 158 will cause the paddle 150 to rotate relative to guide carriage 152 typically approximately +/- 90 degrees from the perpendicular orientation depending on the particular location around the guide track 154.

Typically, the stacks 108 will be fed to the stack aligner by an in feed conveyor 170 and transferred to a low friction table 172 or other non-moving sliding surface/table upon which the stacks 108 can easily slide. The stacks 108 are pushed along the stack travel path 112 through the stack aligner 114 by the paddles 150 while the stacks 108 rest and slide on the low friction table 172. The paddles 150 will push the stacks 108 out of the stack aligner 114 onto an out feed conveyor 174 which transport the stacks downstream to the wrapping arrangement 116. The in feed and out feed conveyors 170, 174 are preferably compression conveyors that each have a top and bottom conveyor that vertically compresses the stacks 108 therebetween as the stacks travel along the stack travel path 112 into and out of the stack aligner 114.

The stack aligner 114 further includes a pair of side guides 176 that laterally squeeze the stacks 108 as the stacks 108 pass along the stack travel path 112 through the stack aligner 114. The side guides 176 help align the stacks 108 by constraining the sheets of the stacks in a direction that is generally perpendicular to the sheet travel path. The side guides 176 typically, at least initially, taper towards one another in a downstream direction.

To push the stacks 108 through the stack aligner, a portion of the paddle travel path, i.e. the path the paddles 150 travel as the guide carriages 152 travel around the carriage track 154, is coincident with the stack travel path 112.

The stack aligner 114 includes a controller 178 that controls the motion profile of the individual paddles 150 by controlling the motion profile of the guide carriages 152 along the carriage track 154. More particularly, the controller 178 will typically control the speed and acceleration of the guide carriages 152 along the guide path defined by the carriage track 154. The controller 178, guide track 154 and guide carriages 152 are configured such that the motion profile of each of the guide carriages 152, i.e. speed and acceleration thereof, can be independently controlled.

In operation, after paddles 150 are inserted both downstream of and upstream of a particular stack 108, the controller 178 will control the paddles 150 such that the paddles 150 will reduce the distance therebetween and press on the leading and trailing ends 126, 128 of the stacks 108 to further facilitate squaring-up the stacks 108.

The stacks 108 are discharged from the stack aligner 114 and dispensed onto the out feed conveyor 174. Once the stacks 108 are fully under the control of the out feed convey 174, the controller 178 will slow the motion of the paddles 150 along the stack travel path such that the paddle 150 no longer contacts or pushes the corresponding stack 108 and then the paddle 150 moves in the orthogonal direction out of the gap 110 between adjacent stacks in which the paddle 150 is positioned.

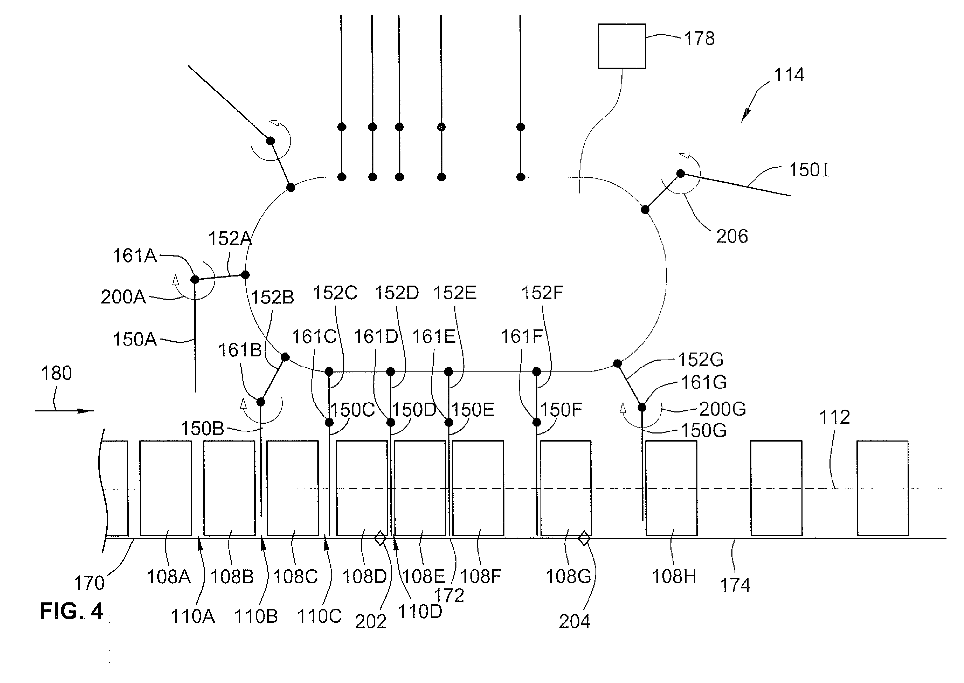

The operation of the stack aligner 114 will be described in more detail with additional reference to FIG. 4. The stacks 108 are moving from left to right and are moving along the stack travel path 112 as illustrated by arrow 180.

Paddle 150A is accelerating vertically downward between stacks 108A and 108B into gap 110A and beginning to accelerate forward in a downstream direction relative to the stack travel path 112. The paddle 150A is substantially vertically oriented and substantially orthogonal to the stack travel path 112 so as to avoid contacting either of stacks 108A, 108B during the insertion process. Paddle 150A is beginning to rotate angularly about axis 161A relative to guide carriage 152A in an angular clockwise direction as illustrated by arrow 200A so as to maintain the vertical/orthogonal orientation relative to the stack travel path 112 during the insertion process.

Paddle 150B has rotated relative to guide carriage 152B about axis 161B and is partially between stacks 108B and 108C and positioned within gap 110B. It is ideally equally spaced from the leading end of stack 108B and trailing end of stack 106C during the insertion process. Paddle 150B has a downstream component of motion that moves the paddle 150B downstream relative to stack travel path 112 as well as a vertical/orthogonal component of motion that moves the paddle 150B further into gap 110B while rotating about axis 161 B to maintain the vertical/orthogonal orientation of the paddle 150B to avoid premature contact with either of stacks 108B, 108C.

Paddle 150B will travel at a faster speed along the stack travel path 112 until the downstream surface of paddle 150B contacts the upstream end of stack 108C, such as paddle 150D relative to stack 108E.

The position of stack 108D is controlled by in feed conveyor 170 until the stack 108D crosses junction 202 between in feed conveyor 170 and sliding table 172, at which time the motion of stack 108D will be provided by paddle 150C as paddle 150C presses against the upstream end of stack 108D. Paddle 150D and stack 108E illustrate such an arrangement where the stack 108E is being pushed along the stack travel path 112 by the paddle 150D, rather than in feed conveyor 170.

At this time, stack 108E is illustrated as being axially squeezed and captivated between the downstream front surface of paddle 150D and an upstream rear surface of paddle 150E. This vertically squares the leading and trailing ends of stack 108E. Stack 108E will also pass through side guides 176 (not shown in FIG. 4) to square up the opposed sides 130, 132 of the stack 108E in a direction perpendicular to stack travel path 112 and perpendicular to the vertical direction, i.e. in a direction generally parallel to top and bottom sides 134, 136. To square up the stack 108E between paddles 150D, 150E, the distance between the adjacent surfaces of paddles 150D, 150E is reduced to a length along the stack travel path 112 that is slightly less than the relaxed length of stack 108E.

After stack 108E is squared up by being squeezed between paddles 150D, 150E, paddle 150E accelerates stack 108108F to match the linear speed of out feed conveyor 174. Not only does paddle 150E marry the linear speed of stack 108F with the linear speed of out feed conveyor 174, paddle 150E properly linearly positions the stack 108F along the stack travel path 112. This acceleration separates paddle 150E from the downstream leading end of stack 108E such that stack 108E is fully controlled only by paddle 150D as stack 108E travels along the stack travel path 112.

Paddle 150F has completed this acceleration and is pushing stack 108G out feed conveyor 174 as the stack 108G is illustrated as crossing junction 204 between sliding table 172 and out feed conveyor 174. Stack 108G enters out feed conveyor 174 at the same speed as the out feed conveyor 174 and at the desired linear position along stack travel path 112.

Paddle 150G has fully pushed stack 108H on to out feed conveyor 174 and its speed component parallel to stack travel path 112 has reduced compared to out feed conveyor 174 such that a gap is formed between the trailing end of stack 108H and the downstream front surface of paddle 150G. Paddle 150G is transitioning vertically/orthogonally out from between stacks 108G and 108H in a substantially orthogonal direction to, again, prevent undesirable contact between the paddle 150G and adjacent stacks 108G, 108H as the paddle 150G is being retracted. As the paddle 150G is being retracted, the paddle 150G rotates angularly about axis 161G in the clockwise direction as represented by arrow 200G.

The paddles 150 will rotate approximately 180 degrees around the corresponding rotational axis 161 in the clockwise direction (illustrated by arrows 200A, 200G) from the begging of the entry process (see e.g. paddle 150A) to the end of the exiting process (e.g. slightly past the location of Paddle 150G) where the paddle 150 has been removed from the gap 110 between adjacent stacks 108.

Paddle 150! has begun to rotate angularly about axis 161I in an opposite angular direction, i.e. counter-clockwise as illustrated by arrow 206. The paddles 150 will rotate approximately 180 degrees around the corresponding rotational axis 161 in the counterclockwise direction 206 after the paddle 150 has been removed from the gap 110 between adjacent stacks 108.

The motion profile of each of the guide carriages 152, and thus each of the attached paddles 150, is independently controlled by controller 178. Further, the position of each guide carriage 152 (and attached paddle 150) is continuously monitored. Because each guide carriage 152 is independently controlled and positionally monitored, the positional tolerances of the stacks 108 along the stack travel path 112 as the stacks 108 are dispensed on to out feed conveyor 174 is very tight. It is desired that the position of the stacks 108 is approximately +/-0.1 inch after the stacks 108 exit the stack aligner. More preferably the positional tolerance of the stacks 108 along the stack travel path 112 is approximately +/-0.05 inches.

This tight positional tolerance of the stacks 108 along the stack travel path 112 as the stacks 108 exit the stack aligner 114 and, consequently, enter the wrapping arrangement 116 significantly improves the operation and consistency of the wrapping process by wrapping arrangement 116.

When the pack forming system 100 uses a folding arrangement 102 that forms longer logs 104, such as illustrated in FIG. 1, the spacing between adjacent logs 104 upstream of the log saw 106 will typically include inconsistent gap lengths. For instance, individual logs 104 may have a spacing of between about 1 to 5 stack lengths and the gap spacing can vary from one gap to the next. These gaps may also be expressed in the number of "air cuts" that the log saw 106 will perform between adjacent logs 104 as no cuts will occur as the log saw 104 passes between the adjacent logs 104.

However, the stack wrapping arrangement 116 cannot accommodate such random spacing. Without an intervening structure between the log saw 106 and wrapping arrangement 116, the stacks 108 would arrive at the wrapping arrangement 116 in groups with varying spacing between adjacent groupings of stacks 108.

The stack aligner 114 can be used to accumulate and control the stacks 108 in such a configuration such that the stacks arrive at the wrapping arrangement with equal spacing. As such, the stack aligner 114 may also be referred to as an accumulator or an aligner/accumulator.

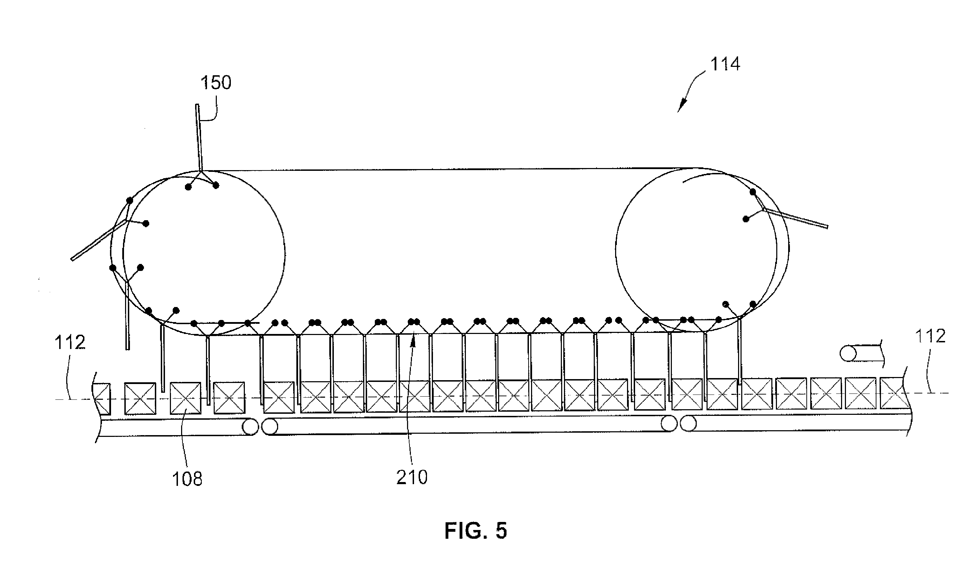

In such a system where groups of stacks 108 are formed with larger spaces formed between groups of stacks 108, i.e. the spacing due to the spacing between adjacent logs 104 upstream of the log saw 106, it can be desirous to lengthen the linear section 210 (also referred to as "accumulation section 210") of the stack aligner 114 (see FIG. 5). By lengthening the linear section 210, more stacks 108 may be accumulated within the stack aligner 114 to compensate for the larger gaps and inconsistencies of the upstream flow of stacks 108 that is being feed from the log saw 106 to the stack aligner 114.

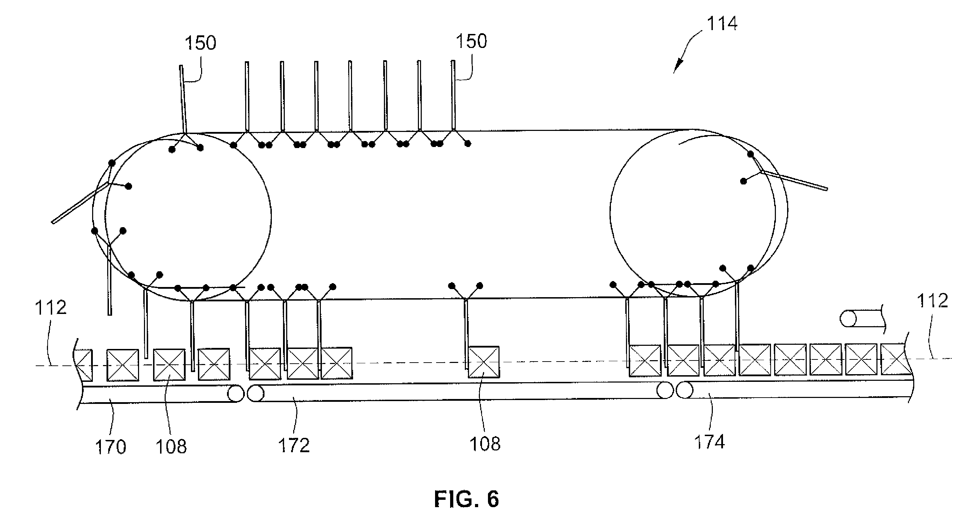

FIG. 5 illustrates a stack aligner similar to that of FIG. 4. However, the stack aligner 114 has been stretched parallel to the stack travel path 112 so as to allow more stacks 108 to be positioned within the stack aligner 114. FIG. 5 illustrates the stack aligner 114 at maximum capacity. FIG. 6 illustrates the stack aligner 114 at significantly less than maximum capacity.

The stacks 108 enter and leave the stack aligner 114 in the same manner as discussed above and are squared up as discussed above. However, the amount of stacks 108 accumulated within the stack aligner 114 can fluctuate between that shown in FIG. 5 (maximum accumulation) and that shown in FIG. 6 depending on the consistency of the upstream supply of stacks 108.

Typically, it is desired to have a minimum of at least two to four packs of accumulation within the stack aligner 114 at all times, i.e. as a minimum accumulation, so as to avoid starving the wrapping arrangement 116.

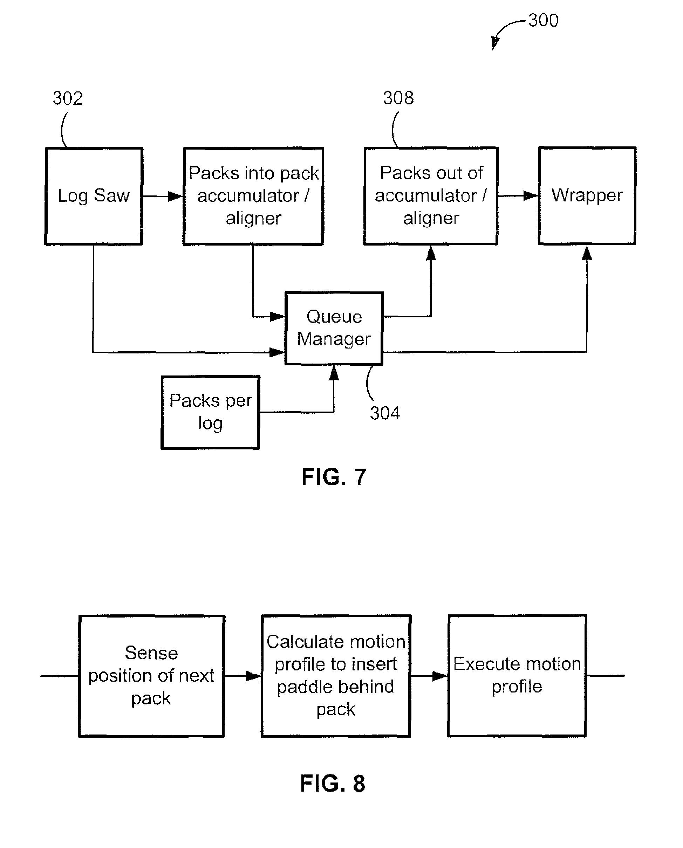

FIG. 7 is a flow chart illustrating the control algorithm 300 for the portion of the system 100 that includes the log saw 106, stack aligner 114, and wrapping arrangement 116. In some embodiments, the portion of the algorithm that utilizes inputs regarding the log saw 106 could be modified to incorporate information from an upstream stream of stacks supplied from a stack merger if a log saw 106 is not incorporated into a system (e.g. such as in a system for forming napkins).

The algorithm 300, at block 302, reads the orbit head position and speed of the log saw 106, the position of a log 104 entering the saw, and calculates the positions of the stacks 108 leaving the log saw 106. The number of stacks per log is entered as a product code. A sensor 220 (see FIG. 1) checks the position of each stack along the stack travel path 112 shortly before entering the stack aligner 114. These inputs along with the number of stacks 108 in the accumulation section 210 are used to control the speed of the wrapper.

As noted above, a paddle 150 is inserted behind each stack 108 entering the stack aligner 150. The paddle 150 is inserted a distance upstream from each stack 108. After being inserted into the gap 110, the paddle 150 is moved into contact with the trailing upstream end of the stack. At this point, the preceding paddle 150 slows down to contact the leading downstream end of the stack 108 to square up the stack 108. Alternatively, the trailing paddle 150 speeds up to push the leading end of the stack 108 against the back side of the preceding paddle to square up the stack 108. These two paddle motions are used selectively depending on the stat of accumulation of stacks within the accumulation section 210 of the stack aligner.

The algorithm 300 includes a queue manager 304 that performs three functions. First, the queue manager 304 controls the wrapping arrangement 116 speed. Second, the queue manager 304 keeps track of the state of the accumulation of stacks 108 within the stack aligner 114. Third, the queue manager 304 controls the motion of the stacks 108 within the stack aligner 114.

The incoming stream of stacks is categorized as full, small gap, or large gap. A full incoming stack stream consists of stacks from one log. A small gap stack stream consists of a gap between consecutive logs where the logs 104 are supplied to the log saw with the minimum gaps between logs. A small gap is typically 2 to 4 log saw orbits (e.g. air cuts) between consecutive logs 104. A large gap is a gap in the supply of logs 104.

The accumulator state is the number of stacks 108 within the accumulation section 210, the position of each stack 108, and the velocity of each stack 108. The position and velocity of each stack within the stack aligner 114 along the stack travel path 112 is inferred from the position and velocity of the paddles 150. The electronics that control the motion of the guide carriages 152 measure the velocity and position of the guide carriages 152 and consequently the paddles 150. When the accumulation section 210 is full, stacks 108 flow from entry to exit with minimum or no gap between stacks 108 within the stack aligner 114 (see e.g. FIG. 5). When the accumulation section 210 is empty, each stack 108 enters the stack aligner 114, is aligned, and then immediately and quickly moved to the exit and onto the out feed conveyor 174. When the accumulation section 210 is partially filled to some extent between maximum and minimum accumulation, operation is controlled to an intermediate degree or degrees. For instance, the operation could be controlled as a ratio based on the accumulation state of the accumulation section 210.

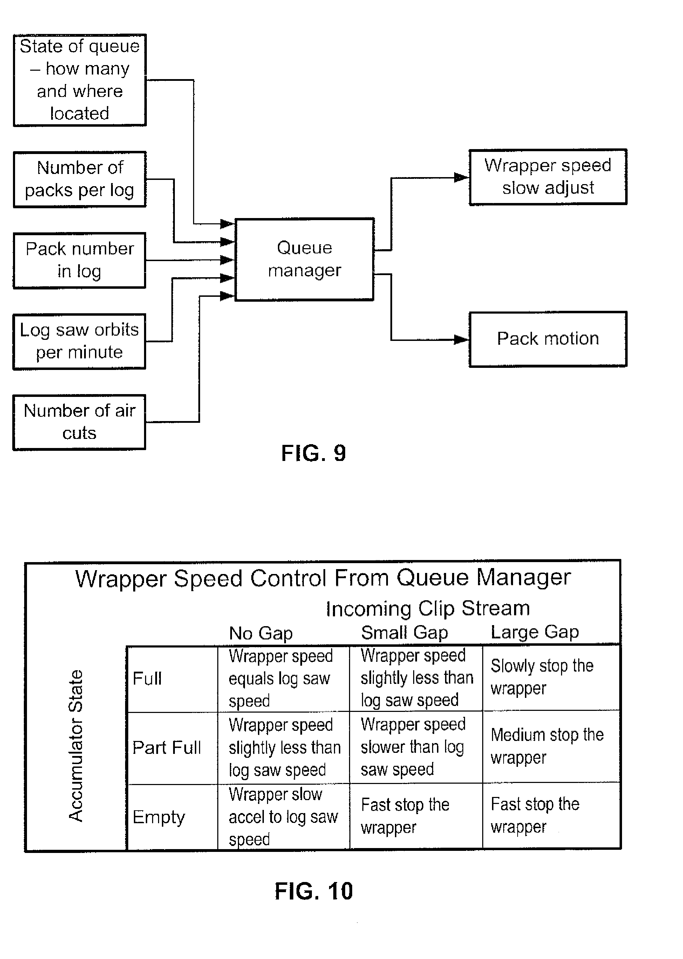

The queue manager controls the speed of the wrapping arrangement 116 according to the queue state and incoming stack stream. The table of FIG. 10 summarizes the algorithm for controlling the speed of the wrapping arrangement 116. The gap between adjacent logs 104, as mentioned above, is normally not constant, therefore the speed of the wrapping arrangement 116 must vary to follow the flow of stacks 108.

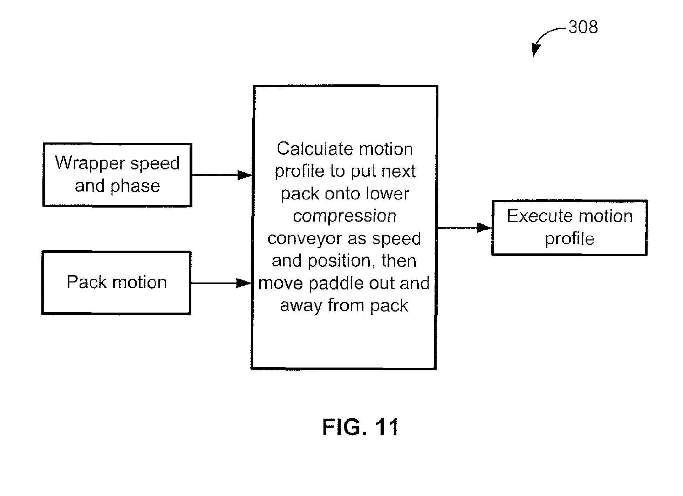

The stack discharge algorithm, with reference to FIG. 11, reads the speed and phase of the wrapper, along with the position of the next stack to be discharged from the accumulation section 210, and calculates a motion profile to put that stack 108 onto the out feed conveyor 174 at correct speed and position along the stack travel path 112. When the stack is fully on the out feed conveyor 174, the corresponding paddle 150 slows to clear the trailing end of the stack 108 and moves up and away as discussed above.

The ability to independently control the guide carriages 152 and consequently paddles 150 allows for the ability to adjust the flow of the stacks out of the stack aligner 114 independent of the flow of stacks 108 into the stack aligner 114, within the limits of the amount of stacks 108 that can be accumulated within the stack aligner 114. This is a significant upgrade over the prior art that typically utilized a fixed paddle conveyor where if the speed of the wrapper had to be reduced the entire speed of the system had to be reduced to avoid jamming the system. Additionally, the present system eliminates or significantly reduces the stack entering variation into the wrapping arrangement 116. Stack entering variation forces the wrapping arrangement 116 to stop and start. However, wrapping arrangements, and particularly progressive wrapping arrangements, do not readily handle stopping and starting operation.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method of aligning a stack of a plurality of vertically stacked sheet-like products as the stack travels along a travel path as the stack travels through a stack aligner along the travel path, the stack having a downstream leading end, an upstream trailing end, a pair of sides extending between the leading end and the trailing end, a top and a bottom, the method comprising:
feeding the stack to the stack aligner,
pressing the stack between a first paddle of the stack aligner that is downstream from the stack and a second paddle of the stack aligner that is upstream from the stack so as to substantially align all of the sheet-like product such that the leading end and trailing end of the stack are substantially parallel to one another and orthogonal to the travel path.

2. The method of claim 1, further comprising squeezing the stack in a transverse direction that is perpendicular to the travel path so as to substantially align substantially all of the sheet-like product such that the sides of the stack are substantially parallel to one another and orthogonal to the leading and trailing ends;
wherein the step of squeezing the stack in a transverse direction is performed by passing the stack between a pair of transversely offset side guides that extend parallel to one another and parallel to the travel path; and
wherein the stack is pushed between the side guides by the second paddle.

3. The method of claim 1, further comprising independently controlling the position of the first and second paddles along the travel path.

4. A method of aligning stacks of a stream of stacks as the stacks travel through a stack aligner as the stacks travel along a stack travel path, each stack including a plurality of stacked sheet-like products, each stack generally having a downstream leading end, an upstream trailing end, a pair of sides extending between the leading end and the trailing end, a top and a bottom, the method comprising:
feeding the stream of stacks to the stack aligner with a gap formed between adjacent stacks,
inserting a paddle of the stack aligner into each gap between adjacent stacks, such that each stack has a paddle upstream of the stack and a paddle downstream from the stack; and
pressing each stack between the paddle upstream of the stack and the paddle downstream of the stack so as to substantially align all of the sheet-like product such that the leading end and trailing end of the stack are substantially parallel to one another and orthogonal to the stack travel path.

5. The method of claim 4, further comprising changing the spacing between the paddle upstream of the stack and the paddle downstream of the stack such that the paddle downstream of the stack no longer contacts the stack and the stack is pushed by the paddle upstream of the stack.

6. The method of claim 4, further comprising independently controlling the position of the first and second paddles along the stack travel path.

7. The method of claim 4, further comprising increasing a number of accumulated stacks within the stack aligner;
wherein increasing a number of accumulated stacks within the stack aligner includes:
feeding the stream of stacks to the stack aligner with a gap formed between adjacent stacks at an average feed rate but with an inconsistent gap width between adjacent stacks; and
dispensing the stacks at an outlet end of the stack aligner at an average dispensing rate with a substantially equal spacing between adjacent stacks, the supply rate being greater than the dispensing rate.

8. The method of claim 4, wherein each paddle remains in a substantially orthogonal orientation relative to the stack travel path as the paddle is inserted into a corresponding gap between adjacent stacks.

9. A method of transporting stacks of a stream of stacks from a log saw where the stacks are formed from a plurality of longer logs to a wrapper for wrapping the stacks, each stack including a plurality of stacked sheet-like products, each stack generally having a downstream leading end, an upstream trailing end, a pair of sides extending between the leading end and the trailing end, a top and a bottom, the method comprising
feeding the stacks to a stack aligner as the stacks travel along a stack travel path at a stack aligner inlet;
dispensing the stacks from the stack aligner at a stack aligner outlet;
sensing a position of each stack prior to feeding the stack to the stack aligner;
calculating a motion profile to insert a paddle of the stack aligner after each stack.

10. The method of claim 9, further comprising
receiving the stacks at an inlet end of the stack aligner at an average supply rate but with unequal spacing between adjacent stacks; and
dispensing the stacks at an outlet end of the stack aligner at an average dispensing rate with a substantially equal spacing between adjacent stacks.

11. A stack aligner for aligning stacks of a stream of stacks as the stacks travel along a stack travel path, adjacent ones of the stacks being longitudinally spaced apart along the stack travel path forming a gap therebetween, each stack including a plurality of stacked sheet-like products, each stack generally having a downstream leading end, an upstream trailing end, and a pair of sides extending between the leading end and the trailing end, the stack aligner comprising:
a plurality of paddles configured for being inserted into the gap between adjacent stacks;
a guide arrangement for guiding the paddles along a paddle travel path, the paddle travel path having a portion thereof that is coincident with a portion of the stack travel path;
a control arrangement configured to independently control the motion of the paddles along the paddle travel path.

12. The stack aligner of claim 11, wherein the control arrangement is configured to control the motion of the of the plurality of paddles such that when adjacent paddles have been inserted into corresponding gaps, the control arrangement reduces the spacing between adjacent paddles such that the paddles press the stack positioned therebetween between the paddle upstream of the stack and the paddle downstream of the stack so as to substantially align all of the sheet-like product such that the leading end and trailing end of the stack are substantially parallel to one another and orthogonal to the stack travel path.

13. The stack aligner of claim 11, wherein:
the guide arrangement includes:
a carriage track that defines a closed guide path;
a first cam track;
a second cam track;
each paddle is pivotally attached to a guide carriage that is guided by the carriage track along the closed guide path,
each paddle is operably coupled to first and second cam followers;
the first cam follower and the first cam track are configured to rotate the paddle relative to the guide carriage at least 75 degrees; and
the second cam follower and the second cam track are configured to rotate the paddle relative to the guide carriage at least 75 degrees.

14. The stack aligner of claim 11, wherein:
the guide arrangement includes:
a carriage track that defines a closed guide path;
a cam track arrangement;
each paddle is pivotally attached to a guide carriage that is guided by the carriage track along the closed guide path for motion in a single direction,
each paddle is operably attached to a cam follower arrangement;
the cam track arrangement and cam follower arrangement are configured to rotate the paddle relative to the carriage track and the closed guide path while inserting the paddle between adjacent stacks; and
the cam track arrangement and cam follower arrangement are configured to rotate the paddle relative to the carriage track and the closed guide path while removing the paddle from between adjacent stacks.

15. The stack aligner of claim 14, wherein:
the cam track arrangement and cam follower arrangement are configured to rotate the paddle relative to the corresponding guide carriage in a first angular direction while inserting the paddle between adjacent stacks; and
the cam track arrangement and cam follower arrangement are configured to rotate the paddle relative to the corresponding guide carriage in the first angular direction while removing the paddle from between adjacent stacks.

16. The stack aligner of claim 15, wherein the cam track arrangement and cam follower arrangement are configured to rotate the paddle relative to the corresponding guide carriage in a second angular direction after the paddle has been removed from between adjacent stacks to prepare the paddle to be inserted into another gap between another pair of adjacent stacks.

17. The stack aligner of claim 14, wherein:
the cam track arrangement and cam follower arrangement are configured to rotate the paddle relative to the carriage track and the closed guide path such that the paddle remains substantially orthogonal to the stack travel path as the paddle is inserted into the gap; and
the cam track arrangement and cam follower arrangement are configured to rotate the paddle relative to the carriage track and the closed guide path such that the paddle remains substantially orthogonal to the stack travel path as the paddle is removed from the gap.

18. The stack aligner of claim 14, wherein:
the first cam follower and the first cam track are configured to maintain upstream and downstream contact surfaces of the paddle in a substantially orthogonal orientation relative to the stack travel path as the paddles are transitioned into a gap between adjacent stacks; and
the second cam follower and the second cam track are configured to maintain the upstream and downstream contact surfaces of the paddle in a substantially orthogonal orientation relative to the stack travel path as the paddles are transitioned out of the gap between adjacent stacks.

19. The stack aligner of claim 11, wherein the control arrangement is configured to control the motion of the of the plurality of paddles such that after adjacent paddles have pressed a stack positioned therebetween, the longitudinal spacing along the paddle travel path, as well as the stack travel path, between the adjacent paddles is increased so that only the trailing end of the stack is contacted by the paddle upstream from the corresponding stack.

20. The stack aligner of claim 11, wherein the motion of the paddles is not mechanically tied to one another such that each paddle can be independently accelerated along the paddle travel path.
